Europäisches Patentamt

European Patent Office

Office européen des brevets

(11) Veröffentlichungsnummer: **0 154 013**
**B1**

(12) **EUROPÄISCHE PATENTSCHRIFT**

(45) Veröffentlichungstag der Patentschrift: **06.06.90**

(21) Anmeldenummer: **84115261.4**

(22) Anmeldetag: **12.12.84**

(51) Int. Cl.⁵: **B 29 B 7/32,** B 29 C 45/58,
B 29 C 47/64

(54) Statische Mischeinrichtung, insbesondere für hochviskose Kunststoffschmelzen verarbeitende Maschine.

(30) Priorität: **05.03.84 CH 1070/84**

(43) Veröffentlichungstag der Anmeldung:
**11.09.85 Patentblatt 85/37**

(45) Bekanntmachung des Hinweises auf die
Patenterteilung:
**06.06.90 Patentblatt 90/23**

(84) Benannte Vertragsstaaten:
**AT DE FR GB IT NL SE**

(56) Entgegenhaltungen:
**WO-A-82/02004**
**CH-A- 615 113**
**GB-A- 149 676**
**US-A-3 652 061**
**US-A-4 049 241**

(73) Patentinhaber: **GEBRÜDER SULZER
AKTIENGESELLSCHAFT**
**Zürcherstrasse 9**
**CH-8401 Winterthur (CH)**

(72) Erfinder: **Gottlieb Schneider**
**Steigstrasse 6**
**CH-8472 Seuzach (CH)**
Erfinder: **Willy Tauscher, Dr,**
**Pfaffenwiesenweg 17**
**CH-8404 Winterthur (CH)**

Courier Press, Leamington Spa, England.

# Beschreibung

Die Erfindung betrifft eine statische Mischeinrichtung, insbesondere für hochviskose Kunststoffschmelzen verarbeitende Maschinen gemäss Oberbegriff von Patentanspruch 1.

Insbesondere in Maschinen für Kunststoffherstellung und -verarbeitung, wie z.B. Spritzgiessmaschinen oder Extruder, treten häufig nach der Schnecke derartiger Maschinen in der Kunststoffschmelze Inhomogenitäten bezüglich der Temperatur und/oder der Additive, wie z.B. Farbe, UV-Stabilisatoren oder Brandschutzmittel, auf.

Zur Eliminierung dieser Nachteile haben sich statische Mischeinrichtungen für Kunststoffschmelzen wie z.B. Polystyrol (PS), Polyäthylen (PE), polypropylen (PP) und dergl. in der Praxis durchgesetzt.

Es handelt sich hierbei um statische Mischeinrichtungen, wie sie aus der CH-PS 615 113 beispielsweise bekannt sind.

Bei derartigen Mischeinrichtungen sind die sich kreuzenden Stege durch einen zentralen Stab miteinander verbunden und die Konturen der der Gehäusewand benachbarten Stege bzw. Stegenden sind dieser angepasst, d.h. sie liegen bündig an der Gehäusewand an und können mit dieser beispielsweise verschweisst sein.

Derartige Mischeinrichtungen sind jedoch für hochviskose Kunststoffschmelzen, wie z.B. Polyvinylchlorid (PVC), hochmolekulares Polyäthylen, Polyacrylnitril oder auch synthetische sowie Natur-Kautschukschmelzen aus nachstehenden Gründen nicht geeignet.

Bei derartigen Schmelzen entsteht ein zu grosser Druckabfall über den statischen Mischeinrichtungen, was zu einem zu grossen Druckaufbau an der Schneckenspitze und daher zu einem zu grossen Energiebedarf der derartige Schmelzen verarbeitenden Maschinen, sowie zu einem reduzierten Durchsatz führen und ausserdem eine mechanische Zerstörung der bekannten Mischeinrichtungen bewirken kann.

Ausserdem führen zu grosse Druckabfälle zu zu grossen lokalen Ueberhitzungen sowie zu zu hohen Scherkräften und somit bei thermisch instabilen und/oder scherempfindlichen Schmelzen mit hoher Viskosität zu Produktschädigungen.

Bekanntlich weisen statische Mischeinrichtungen ein enges Verweilzeitspektrum auf.

Trotzdem gibt es immer noch kritische Punkte bei den bekannten Mischeinrichtungen, z.B. an den Berührungsstellen von sich kreuzenden Stegen oder an Schweissstellen, beispielsweise zwischen Stegen und der Innenwand des Gehäuses. Hier können geringe Mengen der Schmelze hängenbleiben und sich anstauen.

Ein zu langes Verweilen an diesen Stellen kann ebenfalls zu Produktschädigungen führen.

In WO-82/02004 ist ein Wärmetauscher mit hohlen Elementen beschrieben, die in einem Gehäuse für strömende Kunststoffmasse angeordnet sind und die den Zweck haben, die ser entweder Wärme zuzuführen oder zu entziehen. Die Elemente sind willkürlich verteilt, in axialer Richtung des Gehäuses hintereinander angeordnet. Eine derartige Anordnung der Elemente vermag Inhomogenitäten in der Mischung nur eine beschränkte Mischwirkung einzelner Komponenten nur beschränkt auszugleichen.

Die Aufgabe der Erfindung besteht in der Konstruktion einer statischen Mischeinrichtung, insbesondere für das vorstehend genannte Anwendungsgebiet, mit der ein verbesserter Abbau von Inhomogenitäten des behandelten Mediums bei annehmbarem Druckabfall, bei strömungsgünstiger Formgebung der Elemente hoher mechanischer Festigkeit erreicht wird.

Diese Aufgabe wird durch die im Kennzeichen des Patentanspruchs 1 angegebenen Massnahmen gelöst, was experimentell auch bei hohen Viskositäten von beispielsweise 3000 und mehr Pas nachgewiesen werden kann.

Ausführungsformen der Erfindung, bei welchen ein Mischelement aus mindestens zwei Gruppen von Stegen besteht, wobei sich die Stege der einen Gruppe mit den Stegen der anderen Gruppe kreuzen, können darin bestehen, dass

a) die Stege innerhalb einer jeden Gruppe in einer Ebene liegen,

b) die Stege innerhalb einer jeden Gruppe treppenartig gestaffelt in Richtung der Längsachse des Gehäuses angeordnet sind.

Im Falle das Mischelement aus mindestens drei sich kreuzenden Stegen besteht, können gemäss einer weiteren Ausführungsform der Erfindung die Stege spiralartig in Richtung der Längsachse des Gehäuses angeordnet sein.

Die Erfindung umfasst auch Ausführungsformen von Mischelementen, bei denen jedes Mischelement aus mehreren, jeweils aus zwei Gruppen gebildeten Einbauten besteht, wobei die Einbauten in Längsachse des Gehäuses angeordnet sind und derart ineinander verschoben sind, dass Stege eines Einbaus in den Raum des angrenzenden Einbaus ragen, so dass auch Kreuzungsstellen von Stegen benachbarter Einbauten entstehen und die Endstücke dieser Stege in einem Teil der Gehäusewandung eines benachbarten Einbaus befestigt sind.

Eine statische Mischeinrichtung kann aus mehreren Mischelementen bestehen, wobei vorteilhaft die benachbarten Mischelemente bezüglich der Längsachse des Gehäuses um einen Winkel von vorzugsweise 90° gegeneinander verschwenkt sind.

Das Gehäuse kann als zylindrisches Rohr ausgebildet sein, jedoch auch einen anderen, z.B. quadratischen Querschnitt aufweisen.

Das vorzugsweise aus Stahl bestehende Gehäuse ist mit Oeffnungen entsprechenden Querschnitts für die Aufnahme der Endstücke der Stege versehen. Beispielsweise können diese Oeffnungen je nach Querschnitt der Endstücke ausgebohrt oder z.B. ausgefräst werden.

Aufgrund der erfindungsgemässen Formgebung einer Mischeinrichtung kann die Schmelze die freien Zwischenräume von sich kreuzenden Stegen durchströmen sowie auch an der Innenwand des Gehäuses unbehindert entlangströmen.

Dieser Effekt wird dadurch erzielt, dass an den Kreuzungsstellen und an den Wandbefestigungen sich das Arbeitsmittel nicht festsetzen kann und sich keine Totzonen ausbilden können im Gegensatz zu den bekannten Mischeinrichtungen.

Die Stege mit ihren Endstücken können beispielsweise gegossen werden oder auch durch Fräsen hergestellt sein.

Die Stege zwischen ihren Endstücken können streifenartig mit rechteckigem Querschnitt ausgebildet sein oder auch eine andere strömungsgünstige Form, z.B. mit kreis- oder elliptischem Querschnitt aufweisen.

Die Stege untereinander müssen nicht unbedingt alle die gleiche Form und Abmessung aufweisen.

Ebenso muss nicht unbedingt jeder einzelne Steg über seine Länge die gleiche Form und Abmessung besitzen. Gegebenenfalls können die Stege einschliesslich ihrer Endstücke hohl ausgeführt sein für den Durchfluss eines Kühl- oder Heizmediums.

Es ist auch eine Ausführungsform möglich, bei der die Kreuzungsstellen einer Anzahl von Stegen sich ausserhalb des Mischrohres befinden.

Eine erfindungsgemäss ausgebildete Mischeinrichtung soll zwar bevorzugt auf dem Gebiet von hochviskosen Medien, wie Kunststoffschmelzen Anwendung finden. Jedoch kann sie aufgrund des unbehinderten Abströmens an den Kreuzungsstellen der Stege und an ihren glatten Verbindungsstellen mit der Gehäusewand auch beispielsweise bei flüssigen sowie gasförmigen Medien mit Feststoffen, wie beispielsweise Kunststoffschmelzen mit Fasern und Füllstoffen oder Nahrungsmitteln, wie beispielsweise sirupartige Säfte, die Fasern, Häute oder Fruchtstücke enthalten, eingesetzt werden.

Die Erfindung wird im folgenden anhand von in der Zeichnung dargestellten Ausführungsbeispielen erläutert.

Fig. 1 zeigt in einem Längsschnitt einen Teilausschnitt einer, in einem zylindrischen Gehäuse angeordneten statischen Mischeinrichtung längs der Schnittlinie I-I der in

Fig. 2 dargestellten Draufsicht.

Fig. 3 ist ein Querschnitt durch einen Steg dieser Mischeinrichtung längs der Schnittlinie III-III der Fig. 1.

Fig. 4 zeigt in einem Längsschnitt eine Ausführungsform eines in die Gehäusewand eingefügten Steges mit einer varianten Ausführungsform der Endstücke und in

Fig. 5 einen Querschnitt längs der Schnittlinie V-V der Fig. 4.

Fig. 6 ist eine perspektivische Anordnung der Stege von zwei Mischelementen in einem Gehäuse, dessen Kontur durch strichpunktierte Linien angedeutet ist.

Fig. 7 zeigt eine variante, perspektivische Anordnung der Stege von zwei Mischelementen in einem Gehäuse, dessen Kontur ebenfalls durch strichpunktierte Linien angedeutet ist, während in

Fig. 8 ein Querschnitt längs der Schnittlinie VIII-VIII der Mischeinrichtung gemäss Fig. 7 dargestellt ist.

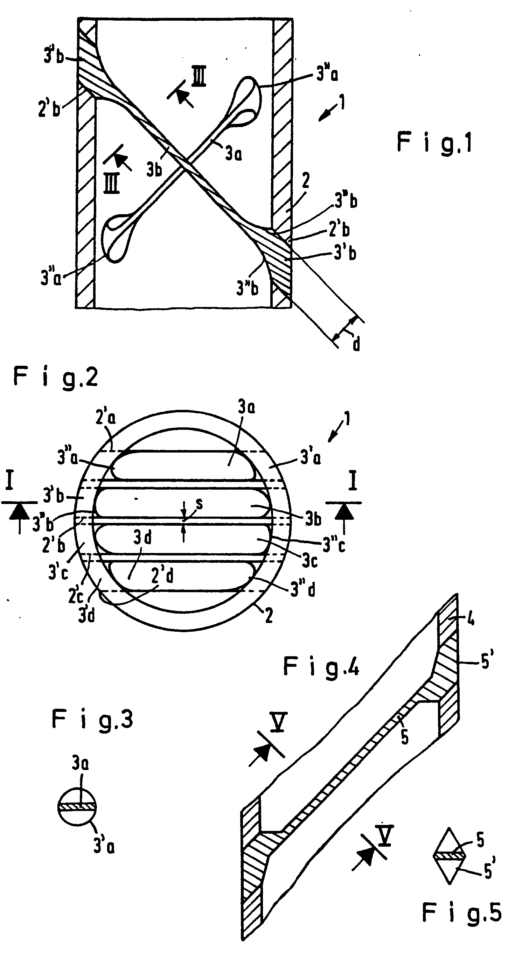

Bei der in Fig. 1 und 2 dargestellten Ausführungsform einer statischen Mischeinrichtung 1 weist diese ein zylindrisches Gehäuse 2 auf, in welchem ein aus vier Stegen 3a bis 3d bestehendes Mischelement eingesetzt ist. Die die Gehäusewand durchdringenden Endstücke 3'a bis 3'd weisen kreiszylindrische Querschnitte von einem Durchmesser d auf, wobei die Bohrungen 2'a bis 2'd in der Gehäusewand 2 den gleichen Durchmesser besitzen.

Wie aus Fig. 2 ersichtlich, sind die sich kreuzenden Stege in einem Abstand s voneinander angeordnet.

Die Uebergangskanten von den Stegen 3a bis 3d zu den Endstücken 3'a bis 3'd sind mit 3''a bis 3''d bezeichnet. Anstelle einer Verlötung der Endstücke der Stege in der Gehäusewand können die Endstücke auch in Bohrungen der Gehäusewand eingeschrumpft werden. Es ist auch möglich, die Bohrungen der Gehäusewand mit einem Gewinde zu versehen sowie die Endstücke der Stege, so dass bei der Montage die Stege in die Gehäusewand eingeschraubt werden können.

Fig. 3 zeigt einen Querschnitt durch einen Steg 3a entlang der Schnittlinie III-III der Fig. 1. Bei dieser Ausführungsform sind die Stege 3a bis 3d streifenförmig und ihre Endstücke 3'a bis 3'd sind kreiszylindrisch ausgebildet.

In Fig. 4 ist ein Teillängsschnitt durch ein kreiszylindrisches Gehäuse 4 und einen streifenartig ausgebildeten Steg 5 mit einem rhombusartigen Endstück 5' dargestellt.

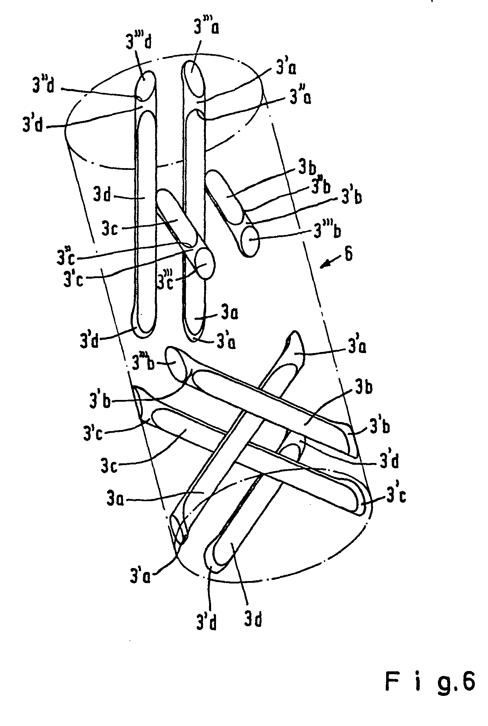

Die perspektivische Darstellung einer, aus zwei Mischelementen bestehenden Mischeinrichtung 6 zeigt Fig. 6. Hierbei bestehen die Mischelemente ebenfalls jeweils aus vier streifenartigen Stegen 3a bis 3d mit zylindrischen Endstücken 3'a bis 3'd und sind gegeneinander um 90° versetzt im Gehäuse 2 angeordnet.

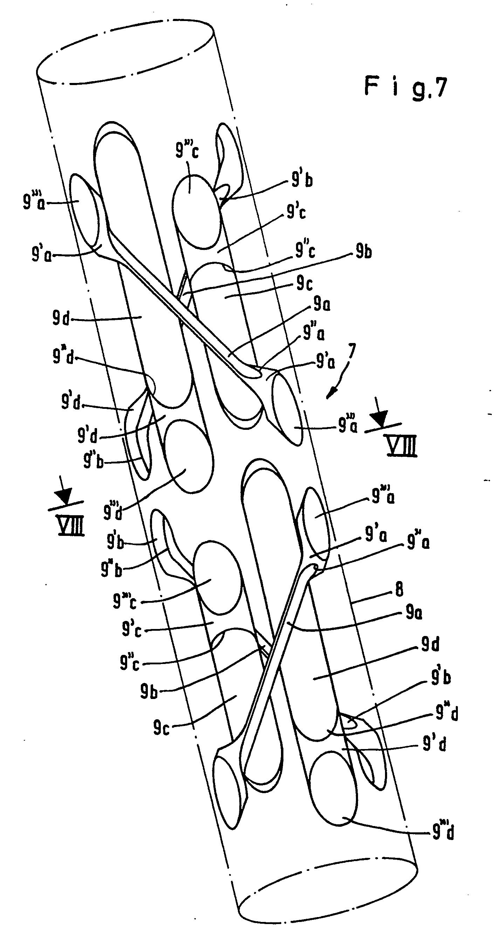

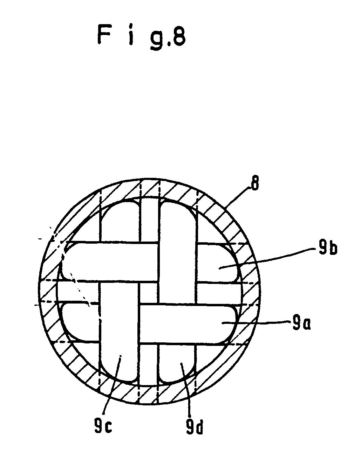

Die Stirnflächen der Endstücke 3'a bis 3'd an der Aussenseite des Gehäuses 2 sind mit 3'''a bis 3'''d bezeichnet. Die in Fig. 7 in perspektivischer Darstellung und in einem Längsschnitt VIII-VIII in Fig. 8 dargestellte Mischeinrichtung 7 weist ebenfalls ein kreiszylindrisches Gehäuse 8 auf und besteht aus zwei im Gehäuse hintereinander angeordneten Mischelementen, die jeweils aus vier sich kreuzenden Stegen 9a bis 9d bestehen.

Hierbei sind die Stege 9a und 9b gegeneinander verkantet, derart, dass die spiralartige Anordnung der beiden Mischelemente gegenläufig vorgenommen ist. Durch diese Anordnung wird neben einer Querströmung des Arbeitsmediums auch eine Rotationsströmung bewirkt.

Die Uebergangskanten von den Stegen 9a bis 9d zu den Endstücken 9'a bis 9'd sind mit den Bezugsziffern 9''a bis 9''d und die Stirnflächen an der Aussenseite des Gehäuses 8 sind mit den Bezugsziffern 9'''a bis 9'''d bezeichnet.

## Patentansprüche

1. Statische Mischeinrichtung (1), insbesondere für hochviskose Kunststoffschmelzen verarbeitende Maschinen, wobei die Mischeinrichtung (1) aus einem rohrartigen Gehäuse (2) mit mindestens einem darin angeordneten Mischelement besteht, welches mindestens zwei, gegenüber der Längsachse des Gehäuses (2) geneigte, sich kreuzende Stege (3a, 3b, 3c, 3d) aufweist, dadurch gekennzeichnet, dass die Stege (3a, 3b, 3c, 3d) eines Mischelementes an Kreuzungsstellen einen freien Zwischenraum aufweisen, und dass die Kreuzungsstellen der Stege (3a, 3b, 3c, 3d) in einer Ebene senkrecht zu der Längsachse des Gehäuses (2) liegen, und dass die Stege (3a, 3b, 3c, 3d) mit ihren Endstücken (3'a, 3'b, 3'c, 3'd) in Oeffnungen (2'a, 2'b, 2'c, 2'd) der Gehäusewand befestigt sind und mit dieser glatte Verbindungsstellen bilden, wobei zwischen den Längskanten der der Gehäusewand benachbarten Stege (3a, 3d) und der Gehäusewand ebenfalls ein freier Zwischenraum verbleibt.

2. Statische Mischeinrichtung (1) nach Anspruch 1, dadurch gekennzeichnet, dass, falls das Mischelement aus mindestens zwei Gruppen von Stegen (3a/3d, 3b/3c) besteht, sich die Stege (3a, 3d) der einen Gruppe mit den Stegen (3b, 3c) der anderen Gruppe kreuzen, und die Stege (3a/3d, 3b/3c) innerhalb einer jeden Gruppe in einer Ebene liegen.

3. Statische Mischeinrichtung (1) nach Anspruch 1, dadurch gekennzeichnet, dass, falls das Mischelement aus mindestens zwei Gruppen von Stegen (3a/3d, 3b/3c) besteht, sich die Stege (3a, 3d) der einen Gruppe mit den Stegen (3b, 3c) der anderen Gruppe kreuzen und die Stege (3a/3d, 3b/3c) innerhalb einer jeden Gruppe treppenartig gestaffelt in Richtung der Längsache des Gehäuses (2) angeordnet sind.

4. Statische Mischeinrichtung (7) nach Anspruch 1, dadurch gekennzeichnet, dass, falls das Mischelement aus mindestens drei sich kreuzenden Stegen besteht, die Stege (9a, 9b, 9c, 9d) spiralartig in Richtung der Längsachse des Gehäuses (8) angeordnet sind.

5. Statische Mischeinrichtung (6) nach Anspruch 1, dadurch gekennzeichnet, dass bei Anordnung von mindestens zwei hintereinander angeordneten Mischelementen (3a, 3b, 3c, 3d) im Gehäuse, die aneinander angrenzenden Mischelemente (3a, 3b, 3c, 3d) bezüglich der Längsachse des Gehäuses um einen Winkel von vorzugsweise 90° gegeneinander verschwenkt sind.

6. Statische Mischeinrichtung (1) nach Anspruch 1, dadurch gekennzeichnet, dass die Endstücke (3'a, 3'b, 3'c, 3'd) der Stege (3a, 3b, 3c, 3d) in der Gehäusewand eingeschrumpft sind.

7. Statische Mischeinrichtung (1) nach Anspruch 1, dadurch gekennzeichnet, dass die Endstücke (3'a, 3'b, 3'c, 3'd) der Stege (3a, 3b, 3c, 3d) in der Gehäusewand eingelötet sind.

8. Statische Mischeinrichtung (1) nach Anspruch 1, dadurch gekennzeichnet, dass die Endstücke (3'a, 3'b, 3'c, 3'd) der Stege (3a, 3b, 3c, 3d) in der Gehäusewand eingeschweisst sind.

9. Statische Mischeinrichtung (1) nach Anspruch 1, dadurch gekennzeichnet, dass die Endstücke (3'a, 3'b, 3'c, 3'd) der Stege (3a, 3b, 3c, 3d) in der Gehäusewand eingeschraubt sind.

10. Statische Mischeinrichtung (1) nach Anspruch 1, dadurch gekennzeichnet, dass die Endstücke (3'a, 3'b, 3'c, 3'd) der Stege (3a, 3b, 3c, 3d) einen kreisförmigen Querschnitt aufweisen.

11. Statische Mischeinrichtung (1) nach Anspruch 1, dadurch gekennzeichnet, dass die Endstücke (3'a, 3'b, 3'c, 3'd) der Stege (3a, 3b, 3c, 3d) einen elliptischen Querschnitt aufweisen.

12. Statische Mischeinrichtung (1) nach Anspruch 1, dadurch gekennzeichnet, dass die Endstücke (3'a, 3'b, 3'c, 3'd) der Stege (3a, 3b, 3c, 3d) einen rhombusartigen Querschnitt aufweisen.

13. Statische Mischeinrichtung (1) nach Anspruch 1, dadurch gekennzeichnet, dass die Endstücke (3'a, 3'b, 3'c, 3'd) der Stege (3a, 3b, 3c, 3d) einen tropfenartigen Querschnitt aufweisen.

14. Statische Mischeinrichtung (1) nach Anspruch 1 und einem der Ansprüche 8, 9 oder 10, dadurch gekennzeichnet, dass die Stege (3a, 3b, 3c, 3d) zwischen ihren Endstücken (3'a, 3'b, 3'c, 3'd) einen rechteckigen Querschnitt aufweisen.

## Revendications

1. Dispositif mélangeur statique (1), notamment pour des machines mettant en oeuvre des masses fondues de matières plastiques à haute viscosité, qui se compose d'un bâti tubulaire (2), dans lequel est placé au moins un élément mélangeur, lequel comporte au moins deux entretoises croisées (3a, 3b, 3c, 3d), inclinées par rapport à l'axe longitudinal du bâti (2), caractérisé en ce que les entretoises (3a, 3b, 3c, 3d) d'un élément mélangeur présentent un intervalle libre aux points de croisement, en ce que les points de croisement des entretoises (3a, 3b, 3c, 3d) se situent dans un plan perpendiculaire à l'axe longitudinal du bâti (2) et en ce que les entretoises (3a, 3b, 3c, 3d) sont fixées par leurs extrémités (3'a, 3'b, 3'c, 3'd) dans des ouvertures (2'a, 2'b, 2'c, 2'd) de la paroi du bâti et forment avec cette paroi des jointures lisses, un intervalle libre demeurant également entre les arêtes longitudinales des entretoises (3a, 3d) contiguës à la paroi du bâti et cette paroi.

2. Dispositif mélangeur statique (1) selon la revendication 1, caractérisé en ce que, si l'élément mélangeur se compose de deux groupes d'entretoises (3a/3d, 3b/3c) au minimum, les entretoises (3a, 3d) de l'un des groupes se croisent avec les entretoises (3b, 3c) de l'autre groupe et les entretoises (3a/3d, 3b/3c) se situent dans un même plan à l'intérieur de chaque groupe.

3. Dispositif mélangeur statique (1) selon la revendication 1, caractérisé en ce que, si l'élément mélangeur se compose de deux groupes d'entretoises (3a/3d, 3b/3c) au minimum, les entretoises (3a, 3d) de l'un des groupes se croisent avec les entretoises (3b, 3c) de l'autre groupe et les entretoises (3a/3d, 3b/3c) à l'intérieur de chacun des groupes sont échelonnées en escalier dans la direction de l'axe longitudinal du bâti (2).

4. Dispositif mélangeur statique (7) selon la revendication 1, caractérisé en ce que, si l'élément mélangeur se compose d'au moins trois entretoises croisées, les entretoises (9a, 9b, 9c, 9d) sont disposées en spirale dans la direction de l'axe longitudinal du bâti (8).

5. Dispositif mélangeur statique (6) selon la revendication 1, caractérisé en ce que pour un agencement d'au moins deux éléments mélangeurs (3a, 3b, 3c, 3d) placés l'un à la suite de l'autre dans le bâti, les éléments mélangeurs contigus (3a, 3b, 3c, 3d) sont décalés les uns des autres d'un angle de préférence de 90° par rapport à l'axe longitudinal du bâti.

6. Dispositif mélangeur statique (1) selon la revendication 1, caractérisé en ce que les extrémités (3'a, 3'b, 3'c, 3'd) des entretoises (3a, 3b, 3c, 3d) sont engagées par rétreinte dans la paroi du bâti.

7. Dispositif mélangeur statique (1) selon la revendication 1, caractérisé en ce que les extrémités (3'a, 3'b, 3'c, 3'd) des entretoises (3a, 3b, 3c, 3d) sont brasées dans la paroi du bâti.

8. Dispositif mélangeur statique (1) selon la revendication 1, caractérisé en ce que les extrémités (3'a, 3'b, 3'c, 3'd) des entretoises (3a, 3b, 3c, 3d) sont soudées dans la paroi du bâti.

9. Dispositif mélangeur statique (1) selon la revendication 1, caractérisé en ce que les extrémités (3'a, 3'b, 3'c, 3'd) des entretoises (3a, 3b, 3c, 3d) sont vissées dans la paroi du bâti.

10. Dispositif mélangeur statique (1) selon la revendication 1, caractérisé en ce que les extrémités (3'a, 3'b, 3'c, 3'd) des entretoises (3a, 3b, 3c, 3d) présentent une section transversale circulaire.

11. Dispositif mélangeur statique (1) selon la revendication 1, caractérisé en ce que les extrémités (3'a, 3'b, 3'c, 3'd) des entretoises (3a, 3b, 3c, 3d) présentent une section transversale elliptique.

12. Dispositif mélangeur statique (1) selon la revendication 1, caractérisé en ce que les extrémités (3'a, 3'b, 3'c, 3'd) des entretoises (3a, 3b, 3c, 3d) présentent une section transversale en losange.

13. Dispositif mélangeur statique (1) selon la revendication 1, caractérisé en ce que les extrémités (3'a, 3'b, 3'c, 3'd) des entretoises (3a, 3b, 3c, 3d) présentent une section transversale en forme de goutte.

14. Dispositif mélangeur statique (1) selon la revendication 1 et l'une quelconque des revendications 8, 9 ou 10, caractérisé en ce que les entretoises (3a, 3b, 3c, 3d) présentent entre leurs extrémités (3'a, 3'b, 3'c, 3'd) une section transversale rectangulaire.

**Claims**

1. A static mixer (1), more particularly for machines processing highly viscous plastics melts, the mixer (1) comprising a tubular casing (2) in which at least one mixing element is disposed, the mixing element having at least two crossing webs (3a, 3b, 3c, 3d) disposed at an inclination to the longitudinal axis of the casing (2), characterised in that a clear space is present between the webs (3a, 3b, 3c, 3d) of a mixing element at the crossing places and in that the crossing places of the webs (3a, 3b, 3c, 3d) are situated in a plane perpendicular to the longitudinal axis of the casing (2) and in that the end parts (3'a, 3'b, 3'c, 3'd) of the webs (3a, 3b, 3c, 3d) are secured in apertures (2'a, 2'b, 2'c, 2'd) in the casing wall, and form smooth functions therewith, a clear space also being left between the casing wall and the longitudinal edges of the webs (3a, 3d) adjacent the casing wall.

2. A static mixer (1) according to claim 1, characterised in that in the case of a mixing element embodied by at least two groups of webs (3a/3d, 3b/3c), the webs (3a,3d) of one group cross the webs (3b, 3c) of the other group and the webs (3a/3d, 3b/3c) in any one group are coplanar.

3. A static mixer (1) according to claim 1, characterised in that in the case of a mixing element embodied by at least two groups of webs, (3a/3d, 3b/3c), the webs (3a/3d) of one group cross the webs (3b, 3c) of the other group and the webs (3a/3d, 3b/3c) in any one group are disposed in staggered relationship after the fashion of a staircase along the casing longitudinal axis.

4. A static mixer (7) according to claim 1, characterised in that in the case of a mixing element embodied by at least three crossing webs, the webs (9a, 9b, 9c, 9d) are disposed helically along the casing longitudinal axis.

5. A static mixer (6) according to claim 1, characterised in that in the event of at least two mixing elements (3a, 3b, 3c, 3d) being disposed in consecutive relationship in the casing, contiguous mixing elements (3a, 3b, 3c, 3d) are disposed at an angular offset of preferably 90° from one another referred to the casing longitudinal axis.

6. A static mixer (1) according to claim 1, characterised in that the end parts (3'a, 3'b, 3'c, 3'd) of the webs (3a, 3b, 3c, 3d) are shrink-fitted in the casing wall.

7. A static mixer (1) according to claim 1, characterised in that the end parts (3'a, 3'b, 3'c, 3'd) of the webs (3a, 3b, 3c, 3d) are soldered in the casing wall.

8. A static mixer (1) according to claim 1, characterised in that the end parts (3'a, 3'b, 3'c, 3'd) of the webs (3a, 3b, 3c, 3d) are welded in the casing wall.

9. A static mixer (1) according to claim 1, characterised in that end parts (3'a, 3'b, 3'c, 3'd) of the webs (3a, 3b, 3c, 3d) are screwed in the casing wall.

10. A static mixer (1) according to claim 1, characterised in that the end parts (3'a, 3'b, 3'c, 3'd) of the webs (3a, 3b, 3c, 3d) are of circular cross-section.

11. A static mixer (1) according to claim 1, characterised in that the end parts (3'a, 3'b, 3'c, 3'd) of the webs (3a, 3b, 3c, 3d) are of elliptical cross-section.

12. A static mixer (1) according to claim 1, characterised in that the end parts (3'a, 3'b, 3'c, 3'd) of the webs (3a, 3b, 3c, 3d) are of diamond-shaped cross-section.

13. A static mixer (1) according to claim 1, characterised in that the end parts (3'a, 3'b, 3'c, 3'd) of the webs (3a, 3b, 3c, 3d) are of drop-shaped cross-section.

14. A static mixer (1) according to claim 1 and any one of claims 8, 9 or 10, characterised in that the webs (3a, 3b, 3c, 3d) are of rectangular cross-section between their end parts (3'a, 3'b, 3'c, 3'd).

F i g.1

F i g.2

F i g.3

F i g.4

F i g.5

F i g.6

2

Fig.7

# F i g.8